Europäisches Patentamt

European Patent Office

Office européen des brevets

(19)

(11) Veröffentlichungsnummer: **0 002 067**
**B1**

(12) **EUROPÄISCHE PATENTSCHRIFT**

(21) Anmeldenummer: **78101417.0**

(22) Anmeldetag: **21.11.78**

(51) Int. Cl.³: **C 04 B 35/56**

(54) Verfahren zur Herstellung von polykristallinen dichten Formkörpern aus Borcarbid durch drucklose Sinterung

(30) Priorität: **22.11.77 DE 2751998**

(43) Veröffentlichungstag der Anmeldung:
**30.05.79 Patentblatt 79/11**

(45) Bekanntmachung des Hinweises auf die Patenterteilung:
**07.01.81 Patentblatt 81/01**

(84) Benannte Vertragsstaaten:
**BE CH DE FR GB NL SE**

(56) Entgegenhaltungen:
**DE - A - 2 624 641**
**FR - A - 1 235 791**
**FR - A - 2 324 590**
**US - A - 3 632 710**
**US - A - 4 005 235**

(73) Patentinhaber: **Elektroschmelzwerk Kempten GmbH**
**Herzog-Wilhelm-Strasse 16**
**D - 8000 München 2 (DE)**

(72) Erfinder: **Schwetz, Karl Alexander, Dr.**
**Bergstrasse 4**
**D - 8961 Sulzberg (DE)**
**Vogt, Georg, Dr.**
**Falchenstrasse 14**
**D - 8960 Kempten-Sankt Mang (DE)**

Courier Press, Leamington Spa, England.

EP 0 002 067 B1

**0 002 067**

Verfahren zur Herstellung von polykristallinen dichten Formkörpern aus Borcarbid durch drucklose
Sinterung

Polykristalline dichte Formkörper werden wegen der Sinterträgheit von Borcarbidpulver in der Technik bis heute ausschließlich durch das sogenannte Heißpress- oder Drucksinterverfahren hergestellt. Gute Sinterkörper aus reinem Borcarbid besitzen eine Dichte zwischen 2,50 und 2,52 g/cm³ (2,52 g/cm³ entspricht der theoretischen Dichte von 100%) und sind praktisch fast porenfrei (Restporosität < 1%). Zur Charakterisierung der mechanischen Festigkeit dient die Biegebruchfestigkeit, die bei derartigen dichten Körpern im Bereich von 300 bis 400 N/mm² liegt.

Die Formgebungsmöglichkeiten beim Drucksintern sind jedoch begrenzt, sodaß hiermit nur relativ kleine und geometrisch einfach geformte Körper hergestellt werden können. Außerdem ist die kontinuierliche Durchführung derartiger Verfahren mit ungewöhnlich hohem Aufwand verbunden. Die Nachbearbeitung der Sinterkörper ist aufgrund der Härte des Borcarbids, das nach dem Diamant und dem kubischen Bornitrid der härteste bisher bekannteste Werkstoff ist, nur unter Verwendung von Diamantwerkzeugen möglich, was ebenfalls einen beträchtlichen Zeit- und Kostenaufwand erfordert.

Seit langem besteht daher der Bedarf, das komplizierte und kostenintensive Heißpressverfahren auch bei Borcarbid durch das in der Pulvermetallurgie bekannte sogenannte Drucklossinterverfahren zu ersetzen. Denn dieses Verfahren erlaubt die Herstellung auch kompliziert gestalteter Formkörper ohne kostspielige und zeitraubende Nachbearbeitung, sowie die wirtschaftliche Massenproduktion von Formteilen in kontinuierlich betriebenen Durchschubsinteröfen.

Versuche zur drucklosen Sinterung von Borcarbid wurden bereits Ende der 60-iger Jahre durchgeführt. Hierbei wurden jedoch bei Sintertemperaturen von 2250° bis 2300°C und Sinterzeiten von 1 bis 2 Stunden nur mäßig dichte Borcarbidkörper erhalten, deren Dichten im Bereich von 2,0 bis 2,2 g/cm³ lagen, das entspricht 80 bis 87% der theoretischen Dichte des Borcarbids (im folgenden als % TD abgekürzt). Für die Biegebruchfestigkeit wurden Werte von 50 bis 100 N/mm² angegeben. Zur Erzielung höherer Dichten (über 90% TD) mußten die Körper so hoch erhitzt werden, daß bereits ein oberflächliches Aufschmelzen eintrat, was naturgemäß die Maßhaltigkeit derselben stark beeinträchtigte. Die Biegefestigkeit konnte hierdurch auf Werte bis zu 200 N/mm² gesteigert werden (vgl. K. Adlassnig in "Planseeberichte für Pulvermettallurgie", Bd. 6 [1958], Seite 92—102).

Die Tatsache, daß Borcarbidpulver mit annähernd stöchiometrischer Zusammensetzung erst im Bereich der Vorschmelztemperaturen (das heißt, bei Temperaturen von etwa 2300°C) durch drucklose Sinterung hochverdichtet werden kann, wird auch durch neuere Arbeiten von P.S. Kislyi und B.L. Grabtschuk (Bericht über Untersuchung der Gesetzmäßigkeiten bei Erzeugung des hochdichten Borcarbids durch Sinterung, 4. Europ. pulvermet, Symposium, Grenoble/Frankreich, 1975, INIS-mf-2082)** bestätigt. Nach den Ausführungen dieser Autoren konnten praktisch fast porenfreie, drucklos gesinterte Borcarbidkörper mit Restporositäten von 0,5 bis 1% und Gefügekorngrößen von mindestens 10 bis 15 $\mu$m erhalten werden. Die Festigkeitswerte dieses gesinterten Borcarbids lagen jedoch 15 bis 20% unter denjenigen des durch Heißpressen verdichteten Borcarbids.

In der US—PS 4.005.235 werden ferner dichte Borcarbidsinterkörper beschrieben, die jedoch Berylliumcarbid enthalten. Zur Herstellung dieser Körper wurden Submicronpulver von Borcarbid und Berylliumcarbid vermischt, unter Formgebung verpreßt und anschließend bei Temperaturen im Bereich von 2200 bis 2280°C drucklos bis zu Dichten von mindestens 85% TD versintert. Die so erthaltenen Formkörper sind polykristallin, das Korngefüge ist 2-phasig und weist runde Borcarbidkörner von 30 bis 300 $\mu$m Durchmesser neben kleineren Berryliumcarbidkörnern auf. Über die Festigkeitswerte werden keine Angaben gemacht. Außerdem wurde durch Vergleichsversuche nachgewiesen (vgl. Tabelle 1 in der oben genannten US—PS), daß das verwendete Borcarbid-Submicronpulver (spezifische Oberfläche 16,1 m²/g entsprechend einer mittleren Teilchengröße von < 0,1 $\mu$m) allein, das heißt ohne Berylliumcarbidzusatz bei einer Temperatur von 2260°C nur bis zu einer Dichte von etwa 72% TD drucklos versintert werden konnte. Der Verfeinerung der Korngröße des Ausgangsmaterials allein kommt demnach keine entscheidende Bedeutung zu.

Obgleich gemäß der oben genannten US—PS hochverdichtete Borcarbidkörper durch drucklose Sinterung bekannt geworden sind, weisen diese, ebenso wie das Verfahren, noch mehrere Nachteile auf:

1.  Der Einsatz stark toxischen und sehr feuchtigkeitsempfindlichen Berylliumcarbids erfordert zusätzliche Schutzmaßnahmen.

2.  Zur Erreichung von Sinterdichten über 90% TD sind Temperaturen erforderlich, die dem Bereich der Vorschmelzzone (etwa 2300°C) sehr nahe kommen, wodurch hohe Anforderungen an eine exakte Temperaturregelung gestellt werden, die in diesem Bereich nur schwierig zu bewerkstelligen ist.

3.  Die resultierenden Sinterkörper weisen ein relativ grobkörniges Gefüge auf, was auf niedrige Festigkeitswerte schliessen läßt.

---

** ref. in Chem. Abstr. Bd. 87 (1977), Nr. 140 112

4. Die Sinterkörper sind fremdgebunden, das heißt sie enthalten metallische Verunreinigungen in Form von Berylliumcarbid, aber auch Magnesium und Eisen in Mengen von 1% und mehr, sodaß ihre Verwendung auf dem Gebiet der Kerntechnik, beispielsweise als Neutronenabsorber praktisch nicht in Frage kommt.

Es stellt sich somit die Aufgabe, ein verbessertes Verfahren zur Herstellung von polykristallinen Formkörpern aus Borcarbid durch drucklose Sinterung zur Verfügung zu stellen, bei dem die oben genannten Nachteile vermieden werden.

Diese Aufgabe wird erfindungsgemäß dadurch gelöst, daß Borcarbid in Pulverform mit einem B: C-Atomverhältnis im Bereich von 4,5 bis 3,5:1 und einer Korngrößenverteilung von 1 $\mu$m un feiner mit einem Kohlenstoff enthaltenden Zusatz in Form von amorphem Kohlenstoff oder einem bei Temperaturen bis zu etwa 1000°C unter Bildung von amorphem Kohlenstoff verkokbaren organischen Material, in einer 0,5 bis 10% freiem Kohlenstoff entsprechenden Menge, bezogen auf das Gesamtgewicht des Borcarbids, homogen vermischt, unter Formgebung kalt verpreßt wird und die so erhaltenen vorgeformten Körper mit einer Dichte von mindestens 50% der theoretischen Dichte des Borcarbids, anschließend in Gegenwart einer gegenüber Borcarbid inerten Atmosphäre oder im Vakuum bei einer Temperatur von 2100° bis 2200°C bis zur Bildung der polykristallinen Formkörper mit einer Dichte von mindestens 90% der theoretischen Dichte des Borcarbids, gesintert werden.

Die nach dem erfindungsgemäßen Verfahren hergestellten polykristallinen Formkörper bestehen praktische ausschließlich aus Bor und Kohlenstoff. Das Verfahren bietet daher den bisher nur durch Heißpressen erreichbaren Vorteil der sogenannten Eigenbindung des Borcarbids, da außer den bereits im Ausgangsmaterial vorhandenen Bor- und Kohlenstoffatomen keine fremden Elemente oder Verbindungen eingeführt werden, die zu fremdgebundenen Sinterkörpern führen. Der mengenmäßige Anteil der Bor- und Kohlenstoffatome im Sinterkörper kann der stöchiometrischen Zusammensetzung $B_4C$ entsprechen, was vorteilhaft dadurch erreicht wird, daß als Ausgangsmaterial ein borreiches Borcarbidpulver verwendet wird mit einem B: C-Atomverhältnis von etwa 4,1 bis 4,5:1 und der Kohlenstoff enthaltende Zusatz in einer der stöchiometrischen Zusammensetzung entsprechenden Menge zugefügt wird, das heißt in einer etwa 0,5 bis 2% freien Kohlenstoff entsprechenden Menge, bezogen auf das Gesamtgewicht des Borcarbids. Der über das B: C-Atomverhältnis 4,0:1 hinausgehende Borgehalt reagiert dabei offensichtlich während des Sintervorgangs mit dem zugefügten Kohlenstoff, sodaß als Endprodukt ein Formkörper der stöchiometrischen Zusammensetzung $B_4C$ resultiert, der praktisch einphasig ist, worunter zu verstehen ist, daß freier Kohlenstoff in Form von Graphit weder röntgenographisch noch keramographisch nachgewiesen werden kann.

Bei Einsatz größerer Mengen des Kohlenstoff enthaltenden Zusatzes (äquivalent bis zu 10% freiem Kohlenstoff, bezogen auf die eingesetzte Borcarbidmenge) oder ausgehend von einem annähernd stöchiometrisch zusammengesetzten oder Kohlenstoffreichen Borcarbidpulver und einer bis zu etwa 5 Gewichtsprozent freiem Kohlenstoff äquivalenten Menge des Kohlenstoff enthaltenden Zusatzes werden graphithaltige Sinterkörper erhalten, deren freier Kohlenstoffgehalt (röntgenographisch als Graphiteinlagerungen nachweisbar) im Bereich von 0,1 bis 8 Gewichtsprozent variiert werden kann.

Für die Durchführung des erfindungsgemäßen Verfahrens wird als Ausgangsmaterial vorteilhaft ein Borcarbidpulver mit einer Reinheit von mindestens 98,5 Gewichtsprozent verwendet, worunter zu verstehen ist, daß die Analysensumme von Bor und Kohlenstoff mindestens 98,5 Gewichtsprozent beträgt, bei einem B: C-Atomverhältnis im Bereich von 3,5 bis 4,5:1. Metallische Verunreinigungen können insgesamt bis zu 0,5 Gewichtsprozent toleriert werden. Der noch verbleibende Differenzbetrag bis zu 100 Gewichtsprozent verteilt sich auf Sauerstoff und Stickstoff in Form von anhaftendem Boraxid und Bornitrid, wobei die Analysensumme von Sauerstoff + Stickstoff < 1 Gewichtsprozent ist. Als Maß für die definitionsgemäß erforderliche Korngrößenverteilung von 1 $\mu$m und feiner wird zweckmäßig die spezifische Oberfläche herangezogen (gemessen nach der BET-Methode), da die Korngrößen selbst erfahrungsgemäß im Submicronbereich nicht mehr mit hinreichender Genauigkeit bestimmt werden können. Aus der Angabe der spezifischen Oberfläche kann die mittlere Teilchengröße gemäß der Gleichung

$$\overline{D} = \frac{6}{S \cdot \delta}$$

$\overline{D}$ = mittlere Teilchengröße in $\mu$m
$S$ = spez. Oberfläche in m²/g
$\delta$ = Pulverdichte in g/cm³

annäherungsweise berechnet werden. Borcarbidpulver mit einer spezifischen Oberfläche im Bereich von 10 bis 50 m²/g haben sich hierbei besonders bewährt.

Das verwendete Borcarbidpulver kann amorph oder kristallin sein, das in der erforderlichen Submicronfeinheit direkt durch Abscheidung aus der Gasphase, beispielsweise aus Borhalogeniden oder Boranen und gasförmigen Kohlenwasserstoffen gewonnen werden kann. Aus wirtschaftlichen Gründen ist es indessen vorteilhaft, von grobkörnigem, kristallinem Borcarbid auszugehen, das großtechnisch beispielsweise nach dem Schmelzreduktionsverfahren von Borsäure durch Kohlenstoff im elektrischen Ofen hergestellt worden ist. Dieses wird zunächst einerIntensivmahlung auf Korngrößen von etwa 3 $\mu$m und feiner unterzogen und daraus anschließend nach üblichen bekannten Verfahren, wie Windsichten oder Schlämmen das Pulver mit der gewünschten spezifischen Oberfläche abgetrennt.

Der Kohlenstoff enthaltende Zusatz in Form von amorphem Kohlenstoff oder einem unter Bildung von amorphem Kohlenstoff verkokbaren organischen Material in den angegebenen Mengen ist für die Durchführung des erfindungsgemäßen Verfahrens von entscheidender Bedeutung. Durch eigene Versuche wurde nämlich nachgewiesen, daß bei der Sinterung von Borcarbidpulvern in Submicronfeinheit und B: C-Atomverhältnissen im Bereich von 4,5 bis 3,5:1 bei der Sinterung bei Temperaturen bis zu 2200°C keine dichten Formkörper erhalten werden konnten. Dichten nahe 90% TD wurden hierbei nur bei Temperaturen in der Nähe des Schmelzpunktes von Borcarbid erreicht, das heißt, die Verringerung der Korngröße des Borcarbidpulvers allein ohne den Kohlenstoff enthaltenden Zusatz spielt demnach keine entscheidende Rolle, was mit den Angaben gemäß dem Stand der Technik übereinstimmt. Darüberhinaus wurde festgestellt, daß auch kohlenstoffreiches Borcarbid, das von der Herstellung her bereits einen zusätzlichen Kohlenstoffgehalt von etwa 2 Gewichtsprozent aufweist, im angegebenen Temperaturbereich nicht über 85% TD verdichtet werden konnte, was vermutlich darauf zurückzuführen sein dürfte, daß der im kohlenstoffreichen Borcarbid vorhandene freie Kohlenstoff in Form von Graphit vorliegt, der sowohl chemisch, als auch sintertechnisch nicht in dem für die Eigenbindung des Borcarbids ausreichenden Maße aktiv ist.

Der für die Durchführung des erfindungsgemäßen Verfahrens erforderliche Kohlenstoff enthaltende Zusatz muß daher bei Beginn des Sintervorgangs als freier Kohlenstoff in amorpher Form zur Verfügung stehen. Das kann dadurch erreicht werden, daß bereits amorpher Kohlenstoff eingesetzt wird, beispielsweise in Form von Ruß, wie Acetylenruß, der vorteilhaft eine spezifische Oberfläche im Bereich von 10 bis 400 $m^2/g$ hat. Zur Erzielung guter Preßeigenschaften der Borcarbid-Ruß Pulvermischungen werden vorteilhaft geringe Mengen eines temporären Bindemittels mitverwendet. Beispiele für derartige temporäre Bindemittel sind Polyvinylalkohol, Stearinsäure und Polyäthylenglykol. Diese Bindemittel können in Mengen bis zu etwa 1%, bezogen auf das Gewicht des eingesetzten Borcarbids, verwendet werden.

Vorzugsweise wird jedoch der Kohlenstoff enthaltende Zusatz in Form eines organischen Materials eingesetzt, das bei Temperaturen bis zu etwa 1000°C unter Bildung von amorphem Kohlenstoff verkokt werden kann. Das Kohlenstoff enthaltende organische Material kann bei Raumtemperatur fest oder flüssig sein. Beispiele hierfür sind Phenoplaste und Steinkohlenteerpech, wobei sich Phenol-Formaldehyd-Kondensationsprodukte vom Typ der Novolake und der Resole besonders bewährt haben, die im Bereich von 100° bis 900°C unter Bildung von amorphem Kohlenstoff in etwa 35 bis 50%-iger Ausbeute zersetzt werden.

Der Kohlenstoff enthaltende Zusatz wird definitionsgemäß und unabhängig von der Form in einer Menge eingesetzt, die 0,5 bis 10% freiem Kohlenstoff entspricht, bezogen auf das Gesamtgewicht des Borcarbids. Geringere Mengen als 0,5% sind praktisch nicht mehr in dem gewünschten Sinne wirksam, das heißt hiermit konnte keine ausreichende Verdichtung des Borcarbids mehr erzielt werden. Größere Mengen als 10 ʕ wichtsprozent Kohlenstoff bringen keinen Vorteil, da sie bereits zu übereutektischen C-Gehalten im Sinterkörper führen können, wodurch die Eigenschaften, wie Dichte und Biegefestigkeit nachteilig beeinflußt werden. Die besten Ergebnisse werden mit Kohlenstoff enthaltenden Zusätzen erzielt, deren Gehalt an freiem C im Bereich von 0,5 bis 7 Gewichtsprozent und insbesondere bei etwa 3 Gewichtsprozent liegt.

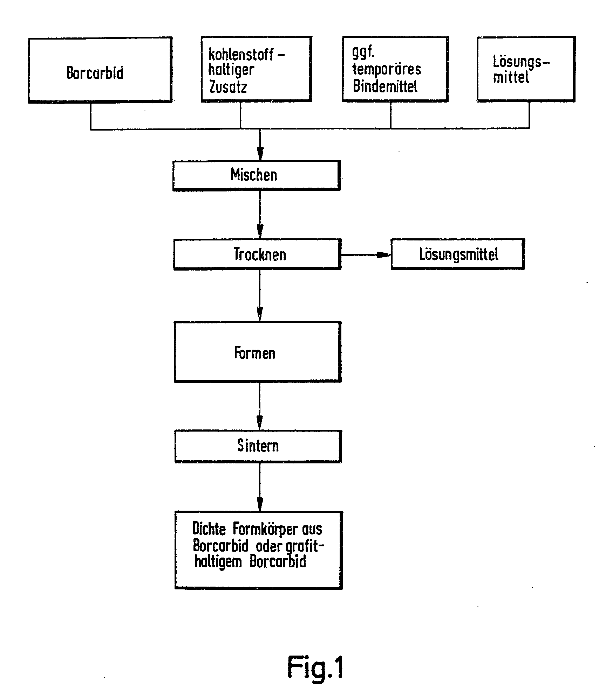

Die Durchführung des erfindungsgemäßen Verfahrens kann anhand des in Abbildung 1 dargestellten schematischen Verfahrensablaufs wie folgt erläutert werden: Zunächst wird das Borcabidpulver mit dem Kohlenstoff enthaltenden Zusatz homogen vermischt, was vorteilhaft dadurch erreicht wird, daß der Kohlenstoff enthaltende Zusatz in Form des organischen Materials in einem organischen Lösungsmittel gelöst und das Borcarbidpulver in der Lösung dispergiert wird. Bei Einsatz von amorphem Kohlenstoff per se wird das Borcarbidpulver gemeinsam mit dem amorphen Kohlenstoff in einer Lösung des temporären Bindemittels dispergiert. Als organische Lösungsmittel können beispielsweise Aceton und niedere aliphatische Alkohole mit 1 bis 6 C-Atomen Verwendung finden. Das Dispergieren kann durch mechanische Bewegung einer dünnflüssigen Suspension in Plastikbehältern unter Verwendung eines mit Polytetrafluoräthylen beschichteten Magnetrührers oder durch Kneten einer dickflüssigen Suspension in einer Knetvorrichtung vorgenommen werden. Nach dem Entfernen des Lösungsmittels, was beispielsweise bei einer dünnflüssigen Suspension durch Sprüh- oder Gefriertrocknung oder bei einer dickflüssigen Suspension durch Abdunsten während des Knetvorgangs erfolgen kann, wird das erhaltene homogene Pulver unter Formgebung kalt verpreßt unter Bildung der vorgeformten Körper mit einer Dichte von mindestens 50% TD. Die Formgebung kann mittels üblicher bekannter Maßnahmen vorgenommen werden, beispielsweise durch Gesenkpressen, isostatisches Pressen, Spritzpressen, Strangpressen oder Schlickergießen. Beim Gesenkpressen in Matrizen, bzw. beim isostatischen Pressen wird üblicherweise ein Druck zwischen 300 und 6000 bar, vorzugsweise zwischen 1000 bis 3000 bar, angewendet. Anschließend werden die vorgeformten Körper definitionsgemäß bei Temperaturen im Bereich von 2100° bis 2200°C drucklos gesintert. Der angegebene Temperaturbereich ist für die Erzielung der gewünschten Eigenschaften von entscheidender Bedeutung, denn es wurde nachgewiesen, daß unter gleichen Bedingungen, jedoch bei tieferen Temperaturen Sinterkörper mit Dichten < 90% TD erhalten wurden, während bei höherer Temperatur zwar hohe Dichten erreicht wurden, aber auf Kosten einer merklichen Kornvergröberung im Sinterkörper, was mit einer Verschlechterung der Festigkeitseigenschaften verbunden war.

Bei Einsatz des Kohlenstoff enthaltenden Zusatzes in Form des verkokbaren organischen Materials wird dieses während des Aufheizvorganges verkokt, sodaß bei Beginn des eigentlichen Sintervorgangs im angegebenen Temperaturbereich der Kohlenstoff in amorpher Form vorliegt. Die vorgeformten Körper können auch in einer getrennten Verfahrensstufe vorerhitzt werden, was insbesondere dann von Vorteil ist, wenn Sinterkörper mit geometrisch komplizierter Gestalt hergestellt werden sollen, da die vorgeformten Körper nach dem Vorerhitzen eine größere Festigkeit aufweisen und somit leichter mechanisch bearbeitet werden können als unmittelbar nach der Kaltverformung. Das Vorerhitzen wird vorzugsweise in Gegenwart einer inerten Atmosphäre und Temperaturen im Bereich zwischen 100° und 1500°C durchgeführt. Wenn indessen keine derartige Bearbeitung erforderlich ist und auch der Oberflächenbeschaffenheit des Endprodukts keine besondere Bedeutung zukommt, können die vorgeformten Körper auch unmittelbar nach der Kaltverformung dem Sintervorgang unterzogen werden. Die Oberflächenrauhigkeit der gesinterten Formkörper hängt von derjenigen des vorgeformten, bzw. vorerhitzten Körpers ab, das heißt, wenn letztere durch Bearbeitung eine glatte Oberfläche aufweisen, zeigt auch der resultierende Sinterkörper eine im wesentlichen glatte Oberfläche, da diese durch den Sintervorgang praktisch nicht verändert wird. Es ist jedoch zweckmäßig, bei Festlegung der Dimensionen des Formkörpers eine bei der Sinterung eintretende Schrumpfung zu berücksichtigen. Erfahrungsgemäß sind die Dimensionen nach der Sinterung abhängig von der Dichte des vorgeformten, bzw. vorerhitzten Körpers und können hieraus in bekannter Weise berechnet werden. So ist beispielsweise, ausgehend von Grünlingsdichten von etwa 60% TD, eine Schrumpfung von 15 bis 18% zu berücksichtigen.

Der Sintervorgang im angegebenen Temperaturbereich wird vorzugsweise in einem Graphitrohrwiderstands — oder Induktionsofen durchgeführt. Für den kontinuierlichen Betrieb wird vorteilhaft ein horizontaler Durchschubofen verwendet, in dem die vorgeformten Körper durch die Heizzone des Ofens transportiert werden und zwar derart, daß sie jeweils für eine vorgesehene Zietspanne auf der gewünschten Temperatur gehalten werden. Das für den Sintervorgang erforderliche Temperaturprogramm (Aufheizen — Verweilen — Abkühlen) ist von der Größe der zu sinternden Formkörper abhängig. Kleine Formkörper mit einem Gewicht von nur einigen Gramm sind im allgemeinen ziemlich unempfindlich gegenüber dem Temperaturprogramm und können rasch, das heißt, in etwa 45 Minuten bis zur Sintertemperatur erhitzt und auf dieser Tempratur etwa 15 Minuten lang gehalten werden. Größere Formkörper erfordern ein längeres Aufheizprogramm, um Temperaturgradienten in den Sinterkörpern zu vermeiden. So werden beispielsweise Preßlinge mit einem Gewicht von etwa 100 g zunächst im Verlauf von einer Stunde auf 400°C, dann innerhalb einer Stunde auf 1500° und schließlich im Verlauf einer weiteren Stunde auf 2150°C erhitzt und auf dieser Temperatur etwa 30 Minuten lang gehalten. Ganz allgemein gesprochen, sind in Abhängigkeit von Größe und Form der zu sinternden Körper Verweilzeiten im Bereich von etwa 10 bis 60 Minuten in den meisten Fällen ausreichend zur Erzielung der gewünschten Sinterdichte von über 90% TD. Zu lange Verweilzeiten bei der Sintertemperatur im Bereich von 2100 bis 2200°C sollten indessen nach Möglichkeit vermieden werden, da sie zu einer Vergröberung des Korngefüges im Sinterkörper führen können und damit zu einer Verschlechterung der mechanischen Festigkeitseigenschaften.

Die zu sinternden vorgeformten Körper sind zweckmäßig in einem inerten Behälter untergebracht, beispielsweise in einem Tiegel aus Graphit oder Titanborid und von einer inerten Atmosphäre oder Vakuum umgeben. In Gegenwart der inerten Atmosphäre, worunter eine gegenüber Borcarbid inerte Schutzgasatmosphäre zu werstehen ist, wird der Sintervorgang vorteilhaft bei Normaldruck durchgeführt, das heißt, bei einem Druck von etwa 1,01 bar. Als Schutzgasatmosphäre können Edelgase, wie Argon oder Helium aber auch Kohlenmonoxid, Wasserstoff oder Stickstoff Verwendung finden.

Vorzugsweise wird die Sinterung der Formkörper jedoch im Vakuum durchgeführt, wobei sich ein Druck von < 1,3 mbar besonders bewährt hat. Durch das Arbeiten im Vakuum werden sinterhemmende Oberflächenschichten der Borcarbidteilchen, wie insbesondere Bortrioxid und Bornitrid bereits bei Temperaturen unterhalb von 1600°C entfernt, sodaß der Sintervorgang selbst im angegebenen Temperaturbereich hierdurch nicht mehr störend beeinflußt werden kann.

Die nach dem erfindungsgemäßen Verfahren hergestellten Formkörper aus reinem Borcarbid der stöchiometrischen Zusammensetzung von $B_4C$ oder aus graphithaltigem Borcarbid mit einem überschüssigen C-Gehalt im Bereich von 0,1 bis 8 Gewichtsprozent weisen definitionsgemäß eine Dichte von mindestens 90% TD, vorzugsweise von mindestens 95% TD, auf und trotz geringer Restporosität Biegebruchfestigkeiten von über 300 N/mm². Für diese hohen mechanischen Festigkeitseigenschaften sind das Fehlen metallischer Verunreinigungsphasen, das äußerst feinkörnige Gefüge (mittlere Gefügekorngröße max. 10 $\mu$m vorzugsweise < 5 $\mu$m) sowie das Auftreten transkristalliner Brüche verantwortlich.

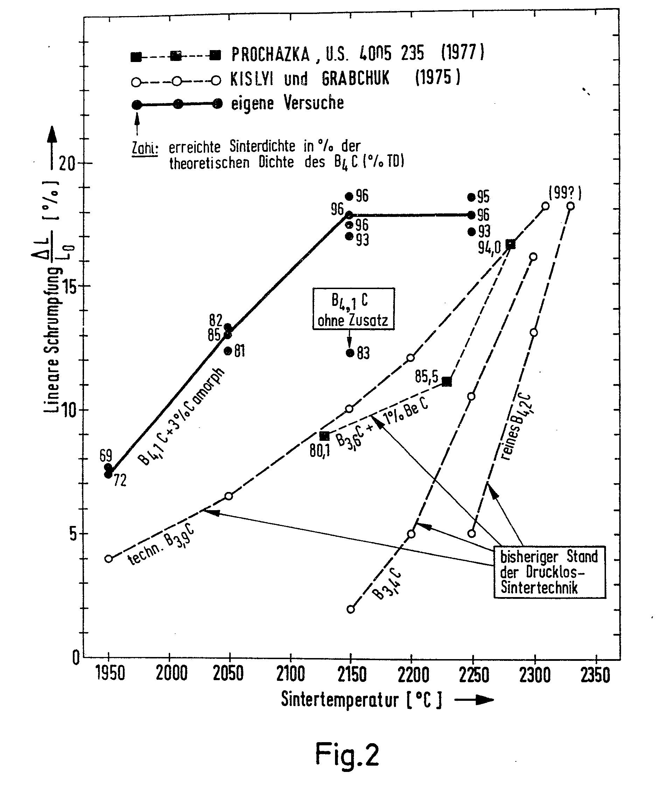

Abbildung 2 ist eine graphische Darstellung, aus der die nach dem erfindungsgemäßen Verfahren erreichten Sinterdichten der Formkörper im Vergleich zu denjenigen gemäß dem Stand der Technik ersichtlich sind. Auf der Ordinate sind die Werte für die lineare Schrumpfung in % aufgetragen, die sich aus der Differenz der Abmessungen ($\Delta 1$) der Körper vor und nach der Verdichtung ergeben ($1_0$ = Durchmesser des vorgeformten Körpers, ausgehend von einer Grünlingsdichte von etwa 60% TD, $1$ = Durchmesser des Formkörpers nach der Verdichtung). Auf der Abszisse sind die Werte für die

5

Sintertemperatur in °C aufgetragen. Die neben den Punkten der Wertepaare Schrumpfung/-Sintertemperatur eingetragenen Zahlen geben die erreichten Sinterdichten in % TD an.

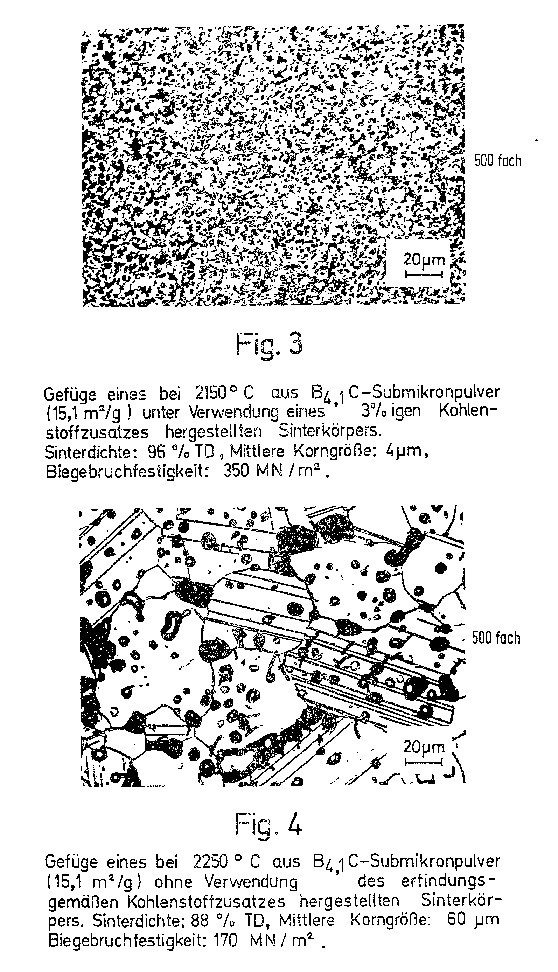

Die Abbildungen 3 und 4 zeigen Gügebilder im Maßstab 1:500.

Abbildung 3 zeigt ein Gefügebild eines nach dem erfindungsgemäßen Verfahren hergestellten Sinterkörpers, Abbildung 4 hingegen ein Gefügebild eines Sinterkörpers, der ohne Kohlenstoff enthaltenden Zusatz hergestellt wurde. Die Unterschiede hinsichtlich der Gefügekorngröße, sowie hinsichtlich der Einheitlichkeit des Gefüges selbst sind hieraus deutlich ersichtlich.

Die hervorragenden Eigenschaften der nach dem erfindungsgemäßen Verfahren drucklos gesinterten Formkörper aus reinem Borcarbid oder graphithaltigem Borcarbid ermöglichen ihre Verwendung auf dem Gebiet der Verschleißtechnik (Sandstrahldüsen, Abrichtwerkzeuge, Auskleidung von Mahlaggregaten, leichtgewichtige Panzerung zur Geschoßabwehr) und der Kerntechnik zur Neutronenabsorption (Regelstäbe, Abschirmungen).

Das erfindungsgemäße Verfahren wird anhand der folgenden Beispiele näher erläutert.

Beispiel 1.

Als Ausgangsmaterial wurde ein Borcarbid-Submicronpulver mit einer spezifischen Oberfläche von 15,1 m²/g, ein handelsübliches pulverförmiges Phenolformaldehydharz vom Novolak-Typ sowie Aceton als Lösungsmittel für das Novolakpulver verwendet. Das Borcarbidpulver war röntgenographisch einphasig und wies folgende chemische Zusammensetzung auf:

| | | | |
|---|---|---|---|
| C | (Gew.-%) | : | 21,27 |
| $B_2O_3$ | (Gew.-%) | : | 0,38 |
| N | (ppm) | : | 1500 |
| Si | (ppm) | : | 1500 |
| Fe | (ppm) | : | 700 |
| Al | (ppm) | : | 200 |
| Ti | (ppm) | : | 200 |
| Mg | (ppm) | : | 70 |

Unter Berücksichtigung des in Form von $B_2O_3$ und BN gebundenen Bors ergibt sich ein B:C Verhältnis von 4,1:1.

Auf 100 Gewichtsteile des Borcarbidpulvers wurden 10,5 Teile Novolakpulver (entsprechend einem Kohlenstoffzusatz von rund 3 Gew.-%) in Form einer acetonischen Lösung zugesetzt und der dickflüssige Brei solange an der Luft geknetet, bis praktisch das gesamte Lösungsmittel abgedunstet und nur noch ein schwacher Geruch nach Aceton wahrnehmbar war. Auf 100 g Borcarbidpulver wurden dabei in der Regel rund 100 ml Novolaklösung verwendet, und die Knetdauer betrug etwa 60 Minuten.

Das nach Beendigung des Knetens erhaltene krümelige Pulver, das sich trocken anfühlte, wurde anschließend in Gummihülsen unter einem Druck von 1500 bar 2 Minuten lang zu zylindrischen Formkörpern von 8 mm Durchmesser und 40 mm Länge mit einer Gründichte von 58 bis 60% der theoretischen Dichte (% TD) des Borcarbids verpreßt. Hierauf wurden die Grünlinge in einem Graphittiegel, der in der Heizzone eines Graphitrohrofens vom Tammann-Typ eingesetzt war, bei 2150°C und einem Vakuum von 0,133 mbar gesintert. Vor dem Aufheizen wurde der Ofenraum mehrmals mit gereinigtem Argongas gespült. Die Sinterung erfolgte nach folgendem Temperaturschema:

20°C bis 2150°C    : 45 Minuten

Halten bei 2150°C    : 15 Minuten

Nach Beendigung der Haltezeit wurde der Ofen abgeschaltet und die Sinterkörper im Ofen auf Raumtemperatur abgekühlt. Die Sinterkörper erfuhren eine 18%-ige Schrumpfung, bezogen auf den Durchmesser der ungesinterten Grünlinge und zeigten eine Dichte von 2,42 g/cm² entsprechend 96% der theoretischen Dichte des Borcarbids (Dichte von reinem $B_4C$: 2,52 g/cm²).

Die Analyse ergab ergab einen Kohlenstoffgehalt von 24,85% C, einen Sauerstoffgehalt von 800 ppm, einen Stickstoffgehalt von 200 ppm und einen Gehalt von metallischen Verunreinigungen < 3000 ppm. Röntgenographisch is schwach Graphit neben rhomboedrischem Borcarbid nachweisbar. Die Biegebruchfestigkeit lag bei 350 N/mm² und wurde an prismatischen Stäbchen der Abmessungen 4 x 4 x 30 mm nach der Dreipunktmethode bei einer Auflageweite von 25 mm gemessen.

6

# 0 002 067

Der Bruch zeigte transkristallines Aussehen. Abbildung 3 ziegt das durch elektrolytische Ätzung mit verdünnter Schwefelsäure erhaltene Gefüge des polierten Sinterkörpers bei 500 facher Vergrößerung, demnach liegt ein sehr homogenes, äußerst feinkörniges Gefüge mit einer mittleren Teilchengröße von rund 4 $\mu$m vor. Eine dem freien Kohlenstoffgehalt von etwa 3 Gew.-% entsprechende 2. Phase konnte mikroskopisch nicht nachgewiesen werden.

### Beispiel 2

Das Verfahren gemäß Beispiel 1 wurde wiederholt, mit der Abänderung, daß anstelle der acetonischen Novolak-Lösung 3 Gew.-% elementarer amorpher Kohlenstoff in Form von Ruß (BET-Oberfläche: 150 m²/g) und 1 Gew.-% Polyvinylalkohol als temporäres Bindemittel in Form einer wäßrigen Lösung mit dem Borcarbidpulver verarbeitet wurden. Der ungesinterte Körper wies eine Dichte von 53%, der resultierende Sinterkörper eine solche von 92% TD auf. Der Gesamtkohlenstoffgehalt des Sinterkörpers betrug 24,80% C.

### Beispiel 3

Das Verfahren gemäß Beispiel 1 wurde wiederholt mit der Abänderung, daß auf jeweils 100 Gewichtsteile des Borcarbidpulvers 1,75 Teile eines handelsüblichen Phenolharzes der Resolstufe A (entsprechend 0,5 Gew.-% Kohlenstoffzusatz) eingesetzt wurden und die Grünlingsherstellung unter einem Preßdruck von 2500 bar vorgenommen wurde. Es wurde eine Grünlingsdichte von 61%, eine Sinterdichte von 96% TD des Borcarbids, eine Biegebruchfestigkeit von 340 N/mm² und eine Gefügekorngröße von etwa 5 $\mu$m erhalten. Im Sinterkörper wurden 21,84% Kohlenstoff analysiert; freier Kohlenstoff in Form von Graphit konnte weder röntigenographisch noch keramographisch nachgewiesen werden. Dieses Beispiel zeigt, daß ausgehend von einem borreichen Borcarbidpulver, dem stöchiometrisch äquivalente Mengen an amorphem Kohlenstoff als Sinterhilfsmittel zugesetzt wurden, Borcarbid-Sinterkörper der Zusammensetzung $B_{4,0}C$ hergestellt werden können. Der über das Bor/Kohlenstoff-Atomverhältnis von 4:1 hinausgehende Borgehalt reagiert offenbar während der Sinterung mit dem zugesetzten Kohlenstoff unter Bildung von stöchiometrischem Borcarbid.

### Beispiele 4 und 5 (Zum Vergleich)

Das Verfahren gemäß Beispiel 1 wurde wiederholt mit der Abänderung, daß kein Kohlenstoff-Zusatz verwendet wurde. Die Grünlingsherstellung erfolgte unter einem Preßdruck von 1500 bzw. 6000 bar. Dabei resultierten Gründichten von 50 bzw. 65% und Sinterdichten von 78 bzw. 83% TD.

Diese Vergleichsbeispiele beweisen, daß durch Sinterung von Borcarbidpulver in Submicronfeinheit bei der Temperatur von 2150°C keine Formkörper mit Dichten > 90% TD erhalten werden, auch nicht durch Erhöhung des Preßdrucks während der Kaltverformung. Die bereits bakannte Tatsache, daß die Korngröße des Borcarbidpulvers allein keine entscheidende Rolle spielt, wird hierdurch bestätigt.

### Beispiel 6 bis 17

Das Verfahren gemäß Beispiel 1 wurde wiederholt, mit der Abänderung, daß die Menge des Kohlenstoffzusatzes, die Sintertemperatur und die Sinteratmosphäre variiert wurden. Die Ergebnisse sind in der Tabelle 1 zusammengefaßt unter Einbeziehung der Ergebnisse von Beispiel 1 und 4.

7

Tabelle 1

| Beispiel Nr. | C-Zusatz zum Borcarbid (Gew.-%) | Sinter temperatur (°C) | Sinteratmos- phäre | Gründichte (% TD) | Sinterdichte (% TD) |
|---|---|---|---|---|---|
| 6***) | 0,0 | 2050 | Vakuum *) | 50 | 64 |
| 7 ***) | 3,0 | 2050 | " | 60 | 85 |
| 4 ***) | 0,0 | 2150 | " | 50 | 78 |
| 8 | 1,0 | 2150 | " | 56 | 92 |
| 1 | 3,0 | 2150 | " | 58 | 96 |
| 9 ***) | 0,0 | 2250 | " | 50 | 88 |
| 10 ***) | 1,0 | 2250 | " | 54 | 93 |
| 11 ***) | 3,0 | 2250 | " | 58 | 95 |
| 12 ***) | 0,0 | 2150 | Argon **) | 50 | 82 |
| 13 | 1,0 | 2150 | " | 56 | 90 |
| 14 | 3,0 | 2150 | " | 60 | 93 |
| 15 ***) | 0,0 | 2250 | " | 50 | 89 |
| 16 ***) | 1,0 | 2250 | " | 55 | 94 |
| 17 ***) | 3,0 | 2250 | " | 60 | 96 |

Zeichenerklärung:

*) $10^{-1}$ Torr = 0,133 mbar
**) 760 Torr = 1,011 bar
***) Zum Vergleich

Aus Tabelle 1 ist deutlich die sinterfördernde Wirkung von C-Zusätzen in der Höhe von 1 bis 3 Gew.-%, bezogen auf die eingesetzte Borcarbidmenge, zu erkennen.

Während die bei 2050°C erhaltenen Sinterkörper noch eine unzureichende Verdichtung aufweisen (Beispiel 7), zeigen die bei der hohen Sintertemperatur von 2250°C erhaltenen sinterkörper (Beispiel 16 und 17) zwar hohe Dichten, aber ein grobkörniges Gefüge mit mettleren Korngrößen zwischen 20 bis 300 $\mu$m. Die fallweise an diesen grobkörnigen Sinterkörpern geprüften Biegebruchfestigkeiten liegen entsprechend niedrig und zwar in Bereich von etwa 50 bis 200 N/mm². Die Abbildung 4 zeigt das bei der Sinterung ohne Kohlenstoffzusatz bei 2250°C im Vakuum (gemäß Beispiel 9) erhaltene Gefüge bei 500-facher Vergrößerung (mittlere Korngröße ca. 60 $\mu$m, Sinterdichte 88% TD). Aus dem Vergleich dieser Abbildung mit Abbildung 3 geht deutlich der Unterschied zu dem erfindungsgemäß hergestellten Sinterkörper (gemäß Beispiel 1) hervor. Ohne Kohlenstoffzusatz werden also selbst bei der hohen Sintertemperatur von 2250°C nur Dichten unterhalb 90% TD erreicht (Beispiel 9 und 15). Betrachtet man den Einfluß der Sinteratmosphäre, so ist aus den Versuchen deutlich auch der Vorteil der Verwendung von Vakuum gegenüber Argon-Schutzgas erkennbar.

Beispiel 18 bis 22

Es wurde ein Borcarbid-Submicronbpulver der folgenden chemischen Zusammensetzung eingesetzt:

| | | | |
|---|---|---|---|
| C | (Gew.-%) | : | 22,40 |
| $B_2O_3$ | (Gew.-%) | : | 0,20 |
| N | (ppm) | : | 1000 |

# 0 002 067

| | | | | |
|---|---|---|---|---|
| Si | (ppm) | : | 1200 |
| Fe | (ppm) | : | 600 |
| Ti | (ppm) | : | 200 |
| Al | (ppm) | : | 200 |
| Mg | (ppm) | : | 100 |

Unter Berücksichtigung des in Form von $B_2O_3$ und BN gebundenen Bors ergibt sich ein B: C-Atomverhältnis von 3,8:1. Die spezifische Oberfläche des Pulvers betrug 28,1 $m^2$/g. Es wurden Mischungen mit verschiedenen Mengen an Kohlenstoffzusatz (siehe Tabelle 2) hergestellt, wobei der Kohlenstoffzusatz, wie in Beispiel 1 beschrieben, in Form der Lösung des Phenolformaldehyd-Novolaks in Aceton eingebracht wurde. Auch die Grünlingsherstellung erfolgte unter den gleichen Bedingungen, wie in Beispiel 1 angegeben. Die Ergebnisse sind in Tabelle 2 zusammengefaßt.

Tabelle 2

| Beispiel Nr. | C-Zusatz (Gew.-%) | Gründichte (% TD) | Sinterdichte (% TD) | Biegebruch-festigkeit N/mm² |
|---|---|---|---|---|
| 18 *) | 0,0 | 54 | 77 | kreideweich |
| 19 | 0,5 | 54 | 94 | 350 |
| 20 | 3,0 | 62 | 96 | 450 |
| 21 | 7,0 | 65 | 93 | 300 |
| 22 *) | 11,0 | 65 | 85 | 210 |

Zeichenerklärung: *) Zum Vergleich

Wie aus Tabelle 2 ersichtlich, wird bei der Sintertemperatur 2150°C ohne Kohlenstoffzusatz nur eine vergleichsweise geringe Dichte erzielt, und die Körper zeigen eine mit Tafelkreide vergleichbare geringe Festigkeit (Beispiel 18). Deutlich geht der günstige Einfluß der Kohlenstoffzusätze im Bereich 0,5 bis 7,0 Gew.-% C mit resultierenden Sinterdichten von über 90% TD und Biegebruchfestigkeiten von > 300 N/mm² hervor (Beispiel 19—21). In Beispiel 22 ist bereits der negative Einfluß eines Kohlenstoffzusatzes in der Höhe von 11 Gew.-% erkennbar.

### Beispiele 23 und 24

Es wurde von einem kohlenstoffreichen Borcarbidpulver der großtechnischen Produktion mit einem Kohlenstoffgehalt von 23,98 Gew.-% C und einer spezifischen Oberfläche von 13,1 $m^2$/g ausgegangen. Röntgenographisch war deutlich Graphit neben Borcarbid nachweisbar. Das B: C-Atomverhältnis betrug 3,5:1, was einem Gehalt an freiem Graphit von etwa 2,3 Gew.-% entspricht. Dieses Borcarbidpulver wurde kin Beispiel 23 ohne Zugabe des erfindungsgemäßen Kohlenstoffzusatzes isostatisch unter einem Druck von 1500 bar zu einem Grünling mit einer Dichte von 61% TD verpreßt. Die Sinterung erfolgte, wie in Beispiel 1 beschrieben, bei 2150°C. Der erhaltene Sinterkörper zeigte eine Dichte von nur 85% TD.

Bei einem, mit demselben Borcarbidpulver unter Verwendung eines Kohlenstoffzusatzes von 4 Gew.-% C unter sonst gleichen Bedingungen durchgeführten Kontrollversuch (Beispiel 24), konnte jedoch eine Dichte von 91% der theoretischen Dichte des Borcarbids erreicht werden. Beispiel 23 beweist, daß der in Form von Graphit in kohlenstoffreichem Borcarbid vorliegende freie Kohlenstoff allein keine sinterfördernde Wirkung zeigt.

## Patentansprüche

1. Verfahren zur Herstellung von polykristallinen Formkörpern aus Borcarbid mit einer Dichte von mindestens 90% der theoretischen Dichte durch drucklose Sinterung, dadurch gekennzeichnet, daß Borcarbid in Pulverform mit einem B:C-Atomverhältnis im Bereich von 4,5 bis 3,5:1 und einer Korngrößenverteilung von 1 $\mu$m und feiner mit einem Kohlenstoff enthaltenden Zusatz in Form von

9

amorphem Kohlenstoff oder einem bei Temperaturen bis zu etwa 1 000°C unter Bildung von amorphem Kohlenstoff verkokbaren organischen Material in einer 0,5 bis 10% freiem Kohlenstoff entsprechenden Menge, bezogen auf das Gesamtgewicht des Borcarbids, homogen vermischt, unter Formgebung kalt verpreßt wird und die so erhaltenen vorgeformten Körper mit einer Dichte von mindestens 50% der theoretischen Dichte des Borcarbids, anschließend in Gegenwart einer gegenüber Borcarbid inerten Atmosphäre oder im Vakuum bei einer Temperatur von 2 100°C bis 2 200°C gesintert werden.

2. Verfahren nach Anspruch 1, dadurch gekennzeichnet, daß das Borcarbid in Pulverform mit einer spezifischen Oberfläche von 10 bis 50 m²/g eingesetzt wird.

3. Verfahren nach Anspruch 1 bis 2, dadurch gekennzeichnet, daß als Kohlenstoff enthaltender Zusatz Ruß mit einer spezifischen Oberfläche von 10 bis 400 m²/g verwendet wird.

4. Verfahren nach Anspruch 1 bis 2, dadurch gekennzeichnet, daß als Kohlenstoff enthaltender Zusatz ein Phenol-Formaldehyd-Kondensationsprodukt oder Steinkohlenteerpech verwendet wird.

5. Verfahren nach Anspruch 1, dadurch gekennzeichnet, daß die vorgeformten Körper vor der Sinterung bei Temperaturen im Bereich zwischen 100° und 1500°C in Gegenwart einer inerten Atmosphäre vorerhitzt werden.

6. Verfahren nach Anspruch 1, dadurch gekennzeichnet, daß die Sinterung der vorgeformten Körper im Vakuum bei einem Druck von < 1,3 mbar durchgeführt wird.

7. Verfahren nach Anspruch 1, dadurch gekennzeichnet, daß die Sinterung der vorgeformten Körper in einer Schutzgasatmosphäre bei Normaldruck durchgeführt wird.

## Revendications

1. Procédé de fabrication de pièces moulées polycristallines en carbure de bore, ayant au moins 90% de la masse volumique théorique, par frittage sans pression, caractérisé en ce qu'on mélange de façon homogène du carbure de bore en poudre dont le rapport atomique B:C est compris entre 4,5:1 et 3,5:1, à granulométrie de 1 $\mu$m ou moins, avec un additif carboné qui est du carbone amorphe ou une matière organique cokéfiable à des températures ne dépassant pas 1000°C environ en formant du carbone amorphe, dans une proportion de 0,5 à 10% en poids de carbone libre par rapport au carbure de bore, on comprime le mélange à froid tout en lui donnant la forme voulue pour obtenir une pièce préformée ayant au moins 50% de la masse volumique théorique du carbure de bore, pièce que l'on fritte ensuite entre 2100 et 2200°C dans une atmosphère inerte vis-à-vis du carbure de bore ou sous vide.

2. Procédé selon la revendication 1, caractérisé en ce que le carbure de bore en poudre a une surface spécifique de 10 à 50 m²/g.

3. Procédé selon l'une des revendications 1 et 2, caractérisé en ce qu'on utilise comme additif carboné un noir de fumée ayant une surface spécifique de 10 à 400 m²/g.

4. Procédé selon l'une des revendications. 1 et 2, caractérisé en ce que l'on utilise comme additif carboné un produit de condensation phénol/formaldéhyde ou du brai de goudron de houille.

5. Procédé selon la revendication 1, caractérisé en ce que l'on préchauffe les pièces préformées, avant de les fritter, entre 100 et 1500°C en atmosphère inerte.

6. Procédé selon la revendication 1, caractérisé en ce que l'on effectue le frittage des pièces préformées sous vide, à une pression inférieure à 1,3 mbar (1,3.10² Pa).

7. Procédé selon la· revendication 1, caractérisé en ce que l'on effectue le frittage dans une atmosphère de gaz protecteur à la pression normale.

## Claims

1. Process for the production of polycrystalline shaped articles of boron carbide having a density of at least 90% of the theoretical density by pressureless sintering, characterized in that boron carbide in powder form which has a B:C atomic ratio within the range of from 4.5 to 3.5:1 and a particle size distribution of 1 $\mu$m and finer is mixed homogeneously with a carbon-containing additive in the form of amorphous carbon or with an organic material that will coke at temperrtures of up to approximately 1,000°C to form amorphous carbon, in a quantity corresponding to 0.5 to 10% free carbon, calculated on the total weight of the boron carbide, is compressed, while cold and while being shaped, and the pre-shaped articles so obtained, having a density of at least 50% of the theoretical density of boron carbide are then sintered in an atmosphere which is inert with respect to boron carbide or *in vacuo* at a temperature of from 2,100°C to 2,200°C.

2. Process according to claim 1, characterized in that boron carbide in powder form having a specific surface area of from 10 to 50 m²/g is used.

3. Process according to claims 1 and 2, characterized in that carbon black having a specific surface area of from 10 to 400 m²/g is used as the carbon-containing additive.

4. Process according to claims 1 and 2, characterized in that a phenol/formaldehyde condensation product or coal-tar pitch is used as the carbon-containing additive.

5. Process according to claim 1, characterized in that, before sintering, the pre-shaped articles are pre-heated to temperatures within the range of between 100°C and 1,500°C in an inert atmosphere.

6. Process according to claim 1, characterized in that the pre-shaped articles are sintered *in vacuo* at a pressure of < 1.3 mbar.

7. Process according to claim 1, characterized in that the pre-shaped articles are sintered in a protective gas atmosphere at normal pressure.

```
┌──────────────┐  ┌──────────────┐  ┌──────────────┐  ┌──────────────┐
│              │  │ kohlenstoff- │  │ ggf.         │  │ Lösungs-     │
│  Borcarbid   │  │ haltiger     │  │ temporäres   │  │ mittel       │
│              │  │ Zusatz       │  │ Bindemittel  │  │              │
└──────┬───────┘  └──────┬───────┘  └──────┬───────┘  └──────┬───────┘
       │                 │                 │                 │
       └─────────────────┼─────────────────┴─────────────────┘
                         ▼
                ┌──────────────────┐
                │     Mischen      │
                └────────┬─────────┘
                         ▼
                ┌──────────────────┐        ┌──────────────────┐
                │     Trocknen     │───────▶│   Lösungsmittel  │
                └────────┬─────────┘        └──────────────────┘
                         ▼
                ┌──────────────────┐
                │      Formen      │
                └────────┬─────────┘
                         ▼
                ┌──────────────────┐
                │     Sintern      │
                └────────┬─────────┘
                         ▼
                ┌────────────────────────┐
                │ Dichte Formkörper aus  │
                │ Borcarbid oder grafit- │
                │ haltigem Borcarbid     │
                └────────────────────────┘
```

# Fig.1

0 002 067

Fig.2

2

500 fach

20μm

## Fig. 3

Gefüge eines bei 2150° C aus $B_{4,1}C$-Submikronpulver (15,1 m²/g ) unter Verwendung eines 3%igen Kohlenstoffzusatzes hergestellten Sinterkörpers.
Sinterdichte: 96 % TD, Mittlere Korngröße: 4μm,
Biegebruchfestigkeit: 350 MN / m².

500 fach

20μm

## Fig. 4

Gefüge eines bei 2250 ° C aus $B_{4,1}C$-Submikronpulver (15,1 m²/g ) ohne Verwendung des erfindungsgemäßen Kohlenstoffzusatzes hergestellten Sinterkörpers. Sinterdichte: 88 % TD, Mittlere Korngröße: 60 μm
Biegebruchfestigkeit: 170 MN / m².